# EUROPEAN PATENT APPLICATION

(11) **EP 0 533 296 A1**
(43) Date of publication of application: **24.03.1993**
(21) Application number: 92202874.1
(22) Date of filing: 18.09.1992
(51) Int. Cl.: H02P 6/02

(54) **Control device for a DC motor**

(30) Priority: 18.09.1991 NL 9101573
(71) Applicant: ENCON B.V., NL-9482 TW Tynaarlo (NL)
(72) Inventor: Wever, Hendrik, NL-9402 JC Assen (NL)
(74) Representative: Smulders, Theodorus A.H.J., Ir.

(57) **Abstract**

A control device for a DC motor of the type with a permanently magnetic rotor and a stator with a single-phase field winding, and comprising switching means for the field winding, the switching means comprising a detection element arranged near the rotor, the detection element providing an output signal that depends on the position of the rotor, this output signal controlling a switching element which is arranged in a connection device for the feeding energy and is capable of reversing the direction of the current in the field winding, whilst a starting circuit is provided, which is connected between the detection element and the switching element, this starting circuit, after the feeding energy has been switched on, keeping the control signal for the switching element constant for a predetermined time.

## Description

This invention relates to a control device for a DC motor of the type with a permanently magnetic rotor and a stator with a single-phase field winding, and comprising switching means for the field winding, the switching means comprising a detection element arranged near the rotor, the detection element providing an output signal that depends on the position of the rotor, this output signal controlling a switching element which is arranged in a connection device for the feeding energy and is capable of reversing the direction of the current in the field winding.

DC motors of the type indicated above have long been known. As a detection element, typically a Hall element is used. In principle, a DC motor having a single-phase stator field and a permanently magnetic rotor has two dead-centre positions, which occur each time the magnetic fields of the rotor and the stator have the same direction. The position wherein the fields have the same direction is a stable dead-centre position and the position wherein the fields have opposite directions is an unstable dead-centre position.

The Hall element, viewed in the direction of rotation of the rotor, is disposed slightly before the stable dead-centre position and therefore always switches the stator current, and hence the stator field, before the stable dead-centre position is achieved, so that the original stable dead-centre position changes into the unstable dead-centre position, which, owing to the rotary speed of the rotor, can be passed without problems.

The manufacturers of DC motors of the type indicated have all made such provisions that the rotor, after the motor has been turned off, does not remain in the dead-centre position but in a slightly turned position relative to the dead-centre positions, so that the rotor has a good starting position when the motor is energized again.

In practice, however, it has been found that still positions occur which the rotor can assume after the motor has been switched off and from which the motor, upon being switched on, does not start up anymore. According as the motor has been in use longer, these positions become areas of some extent owing to wear and increasing internal friction.

When, after the motor has been switched on, the rotor remains stationary in one of the above-mentioned positions or areas, it can be made to rotate in a simple manner by turning the rotor or an element connected therewith by hand. However, this is difficult and impossible in practice if the motor is arranged in a poorly accessible place or a remote place.

It is also possible to overcome the problem outlined by using a three-phase winding for the stator. However, this makes the motor more expensive and more complicated.

On account of their technical simplicity and, hence, their minor susceptibility to failure, DC motors with a permanently magnetic rotor and a continually switching single-phase field are often used in fans, for instance for the supply of combustion air for central heating boilers. For such an application, the fan motor is energized when the heating boiler, controlled by a thermostat, starts, and the motor is switched off when the heating boiler cuts out. It is of great importance that the fan in actual fact begins to rotate when the motor is energized.

The object of the invention is to provide a control device for a DC motor which obviates the starting problems mentioned. To that end, according to the invention, a control device of the type described hereinabove is characterized by a starting circuit connected between the detection element and the switching element, this starting circuit, after the feeding energy has been switched on, keeping the control signal for the switching element constant for a predetermined time.

Hereinafter, the invention will be further described with reference to the accompanying drawings.
Figs 1-4 schematically show, in elucidation of the invention, a DC motor having a single-phase field winding and a permanently magnetic rotor, with the rotor in a number of positions;
Fig. 5 shows a block diagram of a conventional DC motor;
Fig. 6 shows a block diagram of a DC motor comprising a control device according to the invention;
Fig. 7 shows a block diagram of a practical embodiment of a control device according to the invention; and
Fig. 8 shows in more detail a diagram of a practical example of a control device according to the invention.

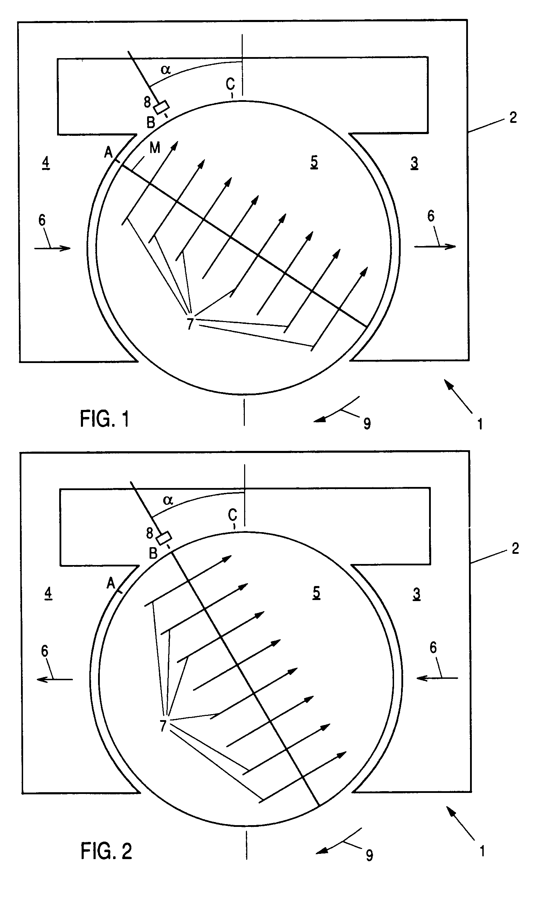

Figs 1-4 schematically show a DC motor with a single-phase field winding and a permanently magnetic rotor in a number of positions. The motor 1 shown comprises a stator 2 with two oppositely located poles 3, 4, between which is disposed the permanently magnetic rotor 5. The field winding is not shown but the stator field is shown schematically by arrows 6. Similarly, the rotor field is indicated by arrows 7.

M indicates the diameter of the rotor, extending transversely to the rotor field. Further, at 8 a Hall element is schematically shown, which, viewed in the direction of rotation of the rotor, is located before the position of equilibrium of the rotor by an arcuate angle α, which may for instance be 30°. The position of equilibrium is the position in which the stator field and the rotor field are in line. In the example shown, the diameter M then extends vertically.

The direction of rotation of the rotor is indicated by an arrow 9. Further, near the Hall element three rotor positions A, B, and C are indicated. In position B, the diameter M points to the Hall element 8. In positions A and C the end of the diameter is located before and beyond the Hall element, respectively.

In Fig. 1 the stator field points from left to right. The rotor is in position A and the rotor field points from the lower left to the upper right. In that position, therefore, the stator field gives a clockwise rotation to the rotor, as indicated by the arrow 9.

As soon as the rotor reaches position B, i.e., when the diameter M points to the Hall element, the stator field is switched. As a result of the moment of inertia, however, the rotor rotates further. This situation is shown in Fig. 2.

During normal operation, the rotor has sufficient speed to pass the (unstable) position of equilibrium, and the rotor is subsequently accelerated by the stator field now pointing to the left, until the diameter M passes the Hall element again. The cycle then repeats itself until the motor is switched off.

If the motor is switched on again at a later time, starting problems may occur, as already noted. These starting problems are a result of the above-described operative principle of the DC motor.

Reference is made to Fig. 1 again. Suppose that the rotor comes to a standstill in position A. If the motor is now energized again, the rotor starts to rotate clockwise, as indicated by the arrow 9, while being accelerated by the action of the stator field.

However, as soon as the rotor passes position B, the Hall element reverses the direction of the stator field. The rotor is then decelerated by the stator field, now having the direction shown in Fig. 2. Since the rotor has only been able to gain speed from position A, there is a chance that the rotor does not have sufficient energy of motion to pass the position of equilibrium.

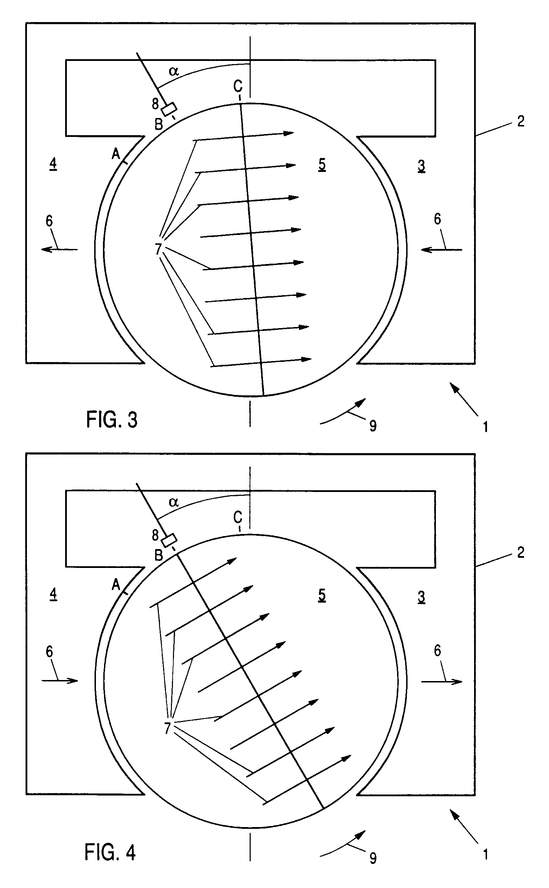

In the example shown, the rotor will come to a standstill in its path beyond position B in position C as a result of the decelerating effect of the stator field. This situation is shown in Fig. 3. From position C, the rotor now starts to rotate counterclockwise, as indicated by arrow 9 in Fig. 3, as a result of the stator field now pointing to the left.

Rotating counterclockwise, the rotor will reach position B again, so that the stator field is reversed again. This situation is shown in Fig. 4. The rotor rotates further in the same direction, but is decelerated by the stator field to such an extent that the rotor will come to a standstill in position A again, whereafter the cycle described repeats itself.

The rotor, therefore, starts to oscillate but fails to rotate.

As will appear from the foregoing, the effect described is the result of the operation of the Hall element, which, in some situations, in fact reverses the stator field too soon after the rotor has started to move.

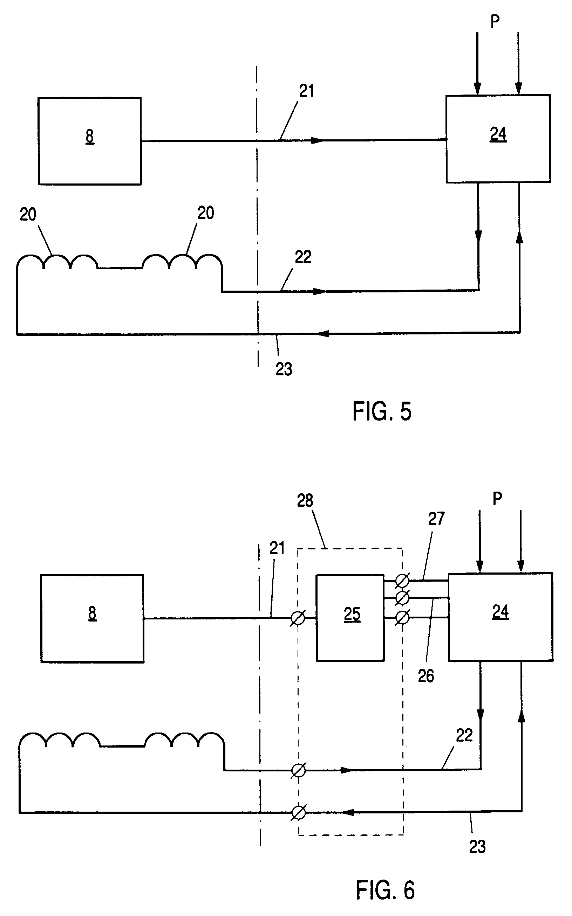

Fig. 5 once again shows schematically from an electrical point of view the structure of a DC motor comprising a switching element for the stator field. Disposed in the motor housing, i.e., to the left of the vertical broken line, are the detection element 8 and the stator coils 20. These components are connected to the surroundings outside the motor housing via electrical wires 21 and 22, 23, respectively. At 24 a connection block for feeding energy P is indicated, which connection block comprises a switching element controllabe by the detection element 8, this switching element being capable of reversing the direction of the current flowing through the wires 22, 23 and hence through the stator coils 20.

Fig. 6 shows a similar block diagram to Fig. 5, but now a control device according to the invention has been included. The control device according to the invention comprises, in addition to the connection block, a starting circuit 25. The starting circuit is so designed that it can be added to an existing device in a simple manner. To that end, in principle only the wire 21 needs to be interrupted and the starting circuit 25 needs to be connected at the interruption. In addition, a feed connection is required, which can advantageously be provided by the connection block 24. To that end, two wires 26, 27 have been provided.

As shown in Fig. 6, the starting circuit can advantageously be arranged in a housing 28, which includes connections for the wires 22, 23 and, internally, a through-connection for those wires, so that a complete, universally applicable unit is obtained.

As explained in the foregoing, the inherent starting problems in a DC motor having a permanently magnetic rotor and a single-phase field are a consequence of the operation of the (Hall) element detecting the rotor field, which, in some situations, prevents the rotor from gaining sufficient speed to make a continued rotation.

Now, according to the invention, after the motor has been switched on, the operation of the Hall element is switched off for a predetermined time, long enough for the rotor to build up sufficient rotation energy to continue the rotation at the moment when the field is reversed.

To that end, according to the invention, after the motor has been switched on, by switching on the feed voltage, first the condition of the Hall element is detected for a short time interval T1. This position is transmitted to the switching element in the connection block 24 for a predetermined time interval T2. During the time interval T2, the Hall element is not connected to the switching element, so that the field cannot be switched. Only after time interval T2 has lapsed is the connection between the Hall element and the switching element reestablished and can the field be reversed again. If during time interval T2 the condition of the Hall element has changed, the field is reversed again directly after interval T2. After that, the Hall element operates in the normal manner.

If the starting position of the rotor is the position shown in Fig. 1, the starting circuit according to the invention causes the field to be switched, not in position B but later, for instance in the vicinity of position C.

If the starting position is located beyond position B, for instance at position C, the field has already been reversed, as shown in Fig. 3. The rotor will then start rotating in the wrong direction (counterclockwise). This is not a problem because then the field is reversed after interval T2, the rotor is decelerated and comes to a standstill in the area beyond position A and subsequently begins to rotate clockwise again through the action of the field.

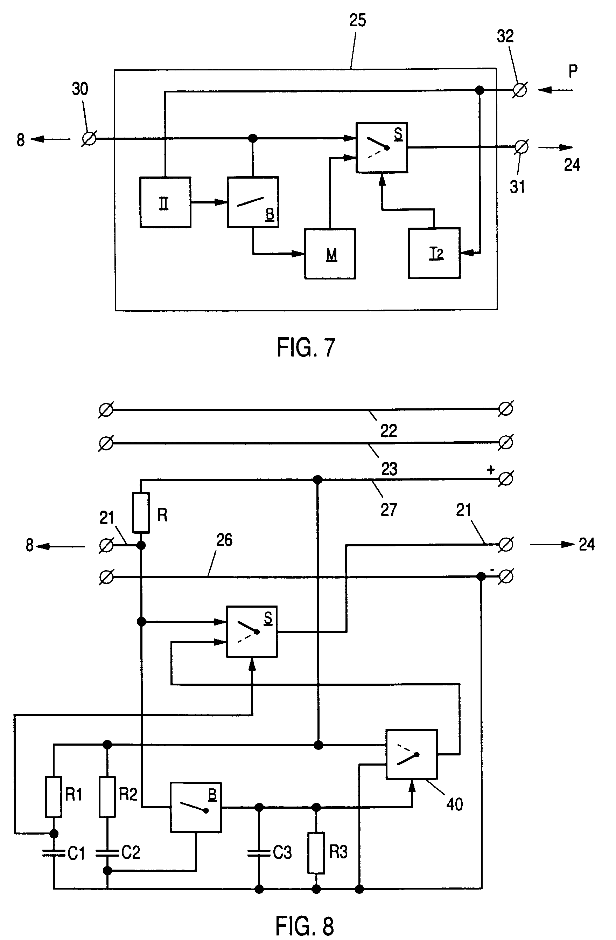

Fig. 7 shows a block diagram of a starting circuit according to the invention. The circuit has an input 30 connected to the Hall element 8 and an output 31 connected to the block 24. Further, a feed connection 32 is provided, which is connected to time circuits T1 and T2 which are actuated after the feeding energy has been switched on. The time circuit controls a sampling switch B which is connected to the connection 30 and samples the condition of the Hall element for a time interval T1 and transmits it to a memory element M. The output of the memory element is connected to a switching circuit S which effects either a connection between the connections 30 and 31 or a connection between the memory element M and the connection 31. The switching circuit S is controlled by the time circuit T2, which, for a time interval T2 that is longer than T1, sets the switching circuit in a condition wherein the memory element M is connected to the connection 31. Thus, for the interval T2 after the motor is switched on, the original condition of the Hall element is transmitted to the connection 31 and hence to the block 24, whilst the instantaneous condition of the Hall element is not transmitted until interval T2 has lapsed.

Fig. 8 shows a more detailed diagram of the circuit of Fig. 7. The switches B and S are CMOS semiconductor switches forming part of an IC of the type 4053. The same applies to a switch 40, which, together with a resistor R3 and a capacitor C3, forms the memory element M of Fig. 7. A resistor R2, together with a capacitor C2, forms the time circuit T1 which controls the switch S, whilst the time circuit T2 is formed by the RC circuit R1C1.

The memory element M in fact also comprises a time circuit R3C3 with a time constant which is greater than that of the RC circuit R1C1.

It is observed that after the foregoing, various modifications will readily occur to those skilled in the art. Thus, the starting circuit can be designed as a fully integrated circuit and/or be incorporated into the connection block. Such modifications are understood to fall within the framework of the invention.

## Claims

1. A control device for a DC motor of the type with a permanently magnetic rotor and a stator with a single-phase field winding, and comprising switching means for the field winding, the switching means comprising a detection element arranged near the rotor, the detection element providing an output signal that depends on the position of the rotor, this output signal controlling a switching element which is arranged in a connection device for the feeding energy and is capable of reversing the direction of the current in the field winding, **characterized** by a starting circuit connected between the detection element and the switching element, said starting circuit, after the feeding energy has been switched on, keeping the control signal for the switching element constant for a predetermined time.

2. A control device according to claim 1, **characterized in that** the starting circuit comprises a first time switching circuit which, directly after the feeding energy has been switched on, for a first predetermined time interval samples the output signal of the detection element and transmits this to a memory element whose output is connected to a switching circuit; and a second time switching circuit which, directly after the feeding energy has been switched on, for a second predetermined time interval that is longer than the first time interval provides a control signal to the switching circuit, such that the input of the switching circuit which is connected with the memory element is through-connected with the output of the switching circuit; the switching circuit having a second input which is connected to the detection element and which during normal operation is connected with the output of the switching circuit and the output of the switching circuit being connected with the switching element of the connection device for feeding energy.

3. A control device according to claim 2, **characterized in that** the first and second time switching circuits comprise an RC circuit.

4. A control device according to claim 2 or 3, **characterized in that** the memory element is built up from an RC circuit and a switch element.

5. A control device according to any one of the preceding claims**, characterized in that** the starting circuit is designed as a separate unit which is provided with external terminals for the detection element, the switching element and the feeding energy.

6. A control device according to claim 5, **characterized in that** the separate unit further comprises terminals for the field winding and for the outputs of the connection device, as well as internal through-connections between the terminals for the field winding and the outputs of the connection device.

7. A DC motor of the type having a permanently magnetic rotor and a single-phase field winding, and provided with switching means for the field winding, **characterized** by a control device according to any one of claims 1-6.

8. A DC motor according to claim 7, used as a driving motor for a fan for the supply of combustion air to a central heating boiler.
